(19) Europäisches Patentamt
European Patent Office
Office européen des brevets

(11) EP 1 923 298 A1

# (12) EUROPEAN PATENT APPLICATION

(43) Date of publication:
**21.05.2008 Bulletin 2008/21**

(51) Int Cl.:
***B62D 5/04*** *(2006.01)*

(21) Application number: **07022218.7**

(22) Date of filing: **15.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **15.11.2006 JP 2006309307**

(71) Applicant: **NSK Ltd.**
**Tokyo 141-8560 (JP)**

(72) Inventor: **Hara, Takeshi**
**Maebashi-shi**
**Gunma 371-8527 (JP)**

(74) Representative: **Grünecker, Kinkeldey, Stockmair & Schwanhäusser**
**Anwaltssozietät**
**Leopoldstrasse 4**
**80802 München (DE)**

## (54) Electronic power steering apparatus

(57) There is provided an electric power steering apparatus in which an electric motor (20) for imparting a steering assist force to a steering mechanism is controlled based on a current control value (I) which is operated from a steering assist command value which is operated based on a steering torque (T) and a vehicle speed (V) and a motor current (I), including a road surface reaction force detection unit (7) for detecting a road surface reaction force (RR), an angular velocity detection unit (51) for detecting an angular velocity (ω) of the motor, and a return angular velocity control unit (40) for operating a return angular velocity control signal (ωr) based on the road surface reaction force (RR), the angular velocity (ω), the steering torque (T) and the vehicle speed (V), wherein the steering assist command value (Iref) is corrected by the return angular velocity control signal (ωr).

FIG. 6

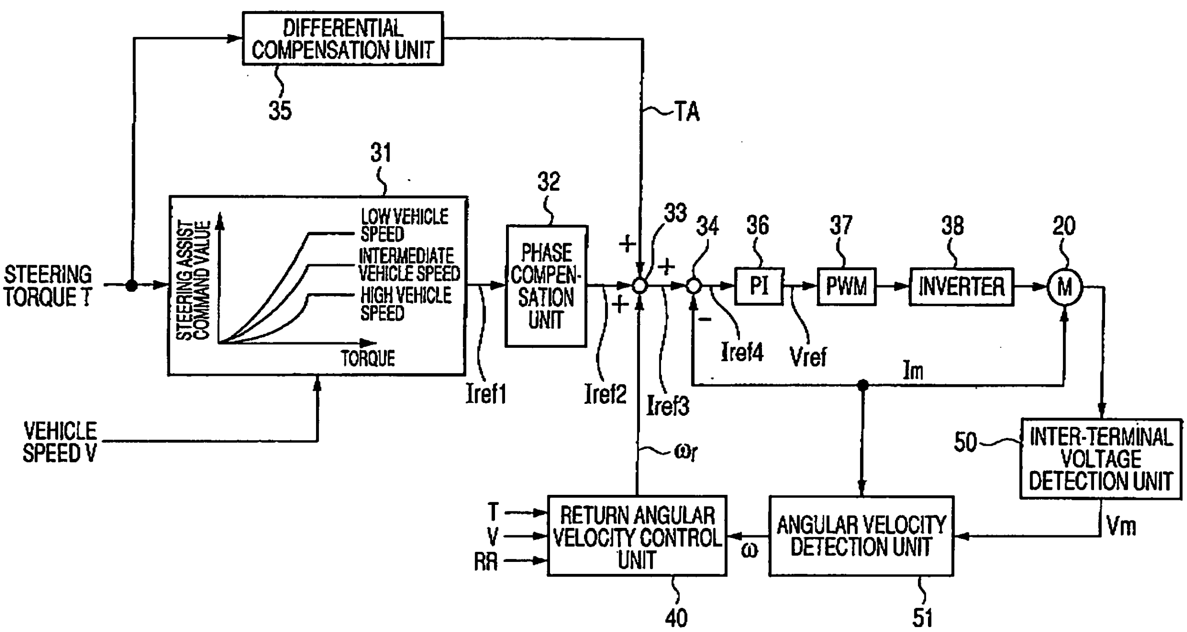


EP 1 923 298 A1

## Description

BACKGROUND OF THE INVENTION

### 1. Field of the Invention

The present invention relates to an electric power steering apparatus made to impart a steering assist force by a motor to a steering apparatus of a vehicle, and more particularly to an electric power steering apparatus which increases the steering function by obtaining a convergent current by setting a motor angular velocity target value using a road surface reaction force (which includes a self-aligning torque (SAT)) in place of a steering angle and correcting a steering assist command value.

### 2. Description of Related Art

In electric power steering apparatus in which the vehicle steering apparatus is assisted with assist load by employing the rotational force of an electric motor, a drive force of the motor is transmitted to a steering shaft or a rack shaft by a transmission mechanism such as a reduction gear or a belt to assist the driver in steering the vehicle. In these conventional electric power steering apparatus, the feedback control is carried out on the motor current in order to generate an assist torque accurately. The feedback control is such that a motor applying voltage is adjusted so that a difference between the current command value and the motor current detection value becomes small, and the adjustment of motor applying voltage is generally implemented by adjusting a duty ratio in a PWM (Pulse Width Modulation) control.

Here, the configuration of a general electric power steering apparatus will be described by reference to Fig. 12. A column shaft 2 of a steering wheel 1 is coupled to tie rods 6 of steered road wheels via a reduction gear 3, universal joints 4A and 4B and a rack-and-pinion mechanism 5. A torque sensor 10 for detecting a steering torque exerted on the steering wheel 1 is provided on the column shaft 2, and a motor 20 which assists with steering effort exerted to the steering wheel 1 is coupled to the column shaft 2 via the reduction gear 3. Electric power is supplied from a battery 14 to a control unit 30 which controls the power steering apparatus, and an ignition signal is inputted into the control unit 30 from an ignition key, whereby the control unit 30 operates a steering assist command value I of a steering assist using an assist map or the like based on a steering torque value T detected by the torque sensor 10 and a vehicle speed detected by a vehicle speed sensor 12 and controls current that is supplied to the motor 20 based on the steering assist command value I so operated.

The control unit 30 is made up mainly of a CPU (which includes an MPU (Micro Processor Unit) and an MCU (Micro Controller Unit) as well), and Fig. 13 shows general functions that are executed by programs in the interior of the CPU.

The functions and operations of the control unit 30 will be described by reference to Fig. 13. A steering torque T that is detected by the torque sensor 10 and a vehicle speed V that is detected by the vehicle speed sensor 12 are inputted into a steering assist command value operation unit 31. The steering assist command value operation unit 31 determines a steering assist command value Iref1 which constitutes a control target value of a current that is supplied to the motor 20 using the assist map or the like based on the steering torque T and the vehicle speed V which have been inputted thereinto. The steering assist command value Iref1 is inputted into an adder unit 33 via a phase compensator unit 32 where the properties of the relevant command value are improved, so as to be added to a steering torque TA which results from compensation of the steering torque in a differential compensator unit 35. Then, what results is inputted into a subtracter unit 34 as a steering assist command value Iref3. In the subtracter unit 34, a deviation Iref4 (= Iref3 - Im) from a motor current Im which has been fed back thereto is calculated, and the deviation Iref4 so operated is then inputted into a PI controller unit 36. A voltage command value Vref, which is obtained by the PI controller unit 36 so that the deviation Iref4 becomes small, is inputted into a PWM controller unit 37, and the motor 20 is then driven by means of PWM via an inverter 38. The current value Im of the motor 20 is detected by a motor current detector and is then fed back to the subtracter unit 34.

In the general electric power steering apparatus that has been described above, returnability of steering wheel is not good due to friction in the reduction gear, and to cope with this, there have been developed various steering returnability controls. Among them, a power steering apparatus, which was disclosed in, for example, Japanese Patent Unexamined Publication No.JP-A-62-241768, is known as one of means for returning the steering wheel to its neutral point in an ensured manner while controlling the returning speed so as not to be too fast. The apparatus disclosed in the JP-A-62-241768 is a power steering apparatus having a return or alignment assist mechanism which allows the steering apparatus to return the straight ahead state. In the power steering apparatus, there are provided a return speed target value determination means for determining a target value for return speed and a controller means for outputting a control signal based on the return speed target value so determined so as to drive and control the return assist mechanism, whereby a steering angular velocity target value for return direction is set according to a steering angle, and a convergent current is imparted so that an actual steering angular velocity follows the steering angular velocity target value so set. With the apparatus described in the JP-A-62-241768, however, there exists a problem that how to return according to the status of road surface reaction force is difficult.

As a solution to the problem, the Japanese Patent Examined Publication No. JP-B-3788906 discloses a controller unit for an electric power steering apparatus. The controller unit disclosed in the JP-B-3788906 includes a target steering angle setting means for setting a target steering angle for returning a steering wheel to its neutral position based on a steering angle and a vehicle speed, a target steering angular velocity setting means for setting a target steering angular velocity based on a deviation between the target steering angle and a steering angle and a vehicle speed, a target convergent current setting means for setting a target convergent current based on a deviation between the target steering angular velocity and a steering angular velocity and a road surface reaction force detection means for detecting a road surface reaction force, wherein the target steering angular velocity setting means corrects the target steering angular velocity based on road surface reaction force information detected by the road surface reaction force detection means.

However, the controller unit described in the JP-B-3788906 requires a steering angle sensor, and this causes a problem that the production costs become increased. This is also true with the power steering apparatus described in the JP-A-62-241768.

## SUMMARY OF THE INVENTION

The invention has been made in view of the situations, and an object of the invention is to provide an electric power steering apparatus in which no steering angle sensor is used so as to avoid an increase in costs and a steering wheel is returned to its neutral position in an ensured manner irrespective of road surface conditions while controlling the return speed so as not to be too fast.

According to an aspect of the invention, there is provided an electric power steering apparatus including:

an electric motor which imparts a steering assist force to a steering mechanism, and is controlled based on a current control value;
a road surface reaction force detection unit which detects a road surface reaction force;
an angular velocity detection unit which detects an angular velocity of the motor; and
a return angular velocity control unit which operates a return angular velocity control signal based on the road surface reaction force, the angular velocity, the steering torque and the vehicle speed, wherein
the current control value is calculated from a motor current and a steering assist command value which is operated based on a steering torque and a vehicle speed, and
the steering assist command value is corrected by the return angular velocity control signal.

According to another aspect of the invention, it is preferable that
the road surface reaction force detection unit is a road surface reaction force detector.

According to still another aspect of the invention, it is preferable that
the road surface reaction force detection unit is SAT (Self-Alignment Torque) estimation unit, and
an SAT estimation value that is estimated by the SAT estimation unit is made to constitute the road surface reaction force.

According to still another aspect of the invention, it is preferable that
the angular velocity detection unit is made to detect or estimate the angular velocity based on an inter-terminal voltage and the motor current.

According to still another aspect of the invention, it is preferable that
the return angular velocity control unit includes:

a motor angular speed target value setting unit which sets a motor angular velocity target value based on the road surface reaction force;
a first gain adjustment unit which outputs a first gain according to the vehicle speed;
a subtracter unit for obtaining a deviation between the angular velocity and a value obtained by multiplying the motor angular velocity target value by the first gain, and
a third gain adjustment unit which outputs a third gain according to the steering torque, and
wherein the return angular velocity control signal is made up by multiplying the deviation by the third gain.

According to still another aspect of the invention, it is preferable that
the return angular velocity control unit includes:

a motor angular speed target value setting unit which sets a motor angular velocity target value based on the road surface reaction force;
a first gain adjustment unit which outputs a first gain according to the vehicle speed;
a second gain adjustment unit which outputs a second gains according to the vehicle speed;
a subtracter unit which obtains a deviation between the angular velocity and a value obtained by multiplying the motor angular velocity target value by the first gain; and
a third gain adjustment unit which outputs a third gain according to the steering torque, and

wherein the return angular velocity control signal is made up by multiplying the deviation by the second gain and multiplying the resultant value from the multiplication by the third gain.
According to still another aspect of the invention, it is preferable that
the motor angular velocity target value is set by a gain which varied in accordance with the road surface reaction force.
According to the electric power steering apparatus of the invention, since the motor angular velocity target value is set using the road surface reaction force or the SAT estimation value, almost the same function and advantage as those obtained when the motor angular velocity target value is set using a steering angle can be obtained on a normal road surface without using a steering angle sensor. In addition, with a small road surface friction coefficient, since the increase in road surface friction or SAT estimation value relative to a steering angle becomes smaller than the normal state, the motor angular velocity target value is also set to be smaller as the friction coefficient becomes so smaller. Accordingly, when the friction on the road surface is small, the steering wheel return speed is suppressed, and the steering wheel can be returned to its neutral position in an ensured manner. On the contrary, also when the friction coefficient on the road surface is large, an appropriate return speed can be set for the same reason.

BRIEF DESCRIPTION OF THE DRAWINGS

Fig. 1 is a characteristic chart showing an example of a relationship between steering angle and road surface reaction force when vehicle speed is used as a parameter;
Fig. 2 is a characteristic chart showing an example of a relationship between steering angle and road surface reaction force when friction coefficient is used as a parameter;
Fig. 3 is a diagram showing a configuration example of an electric power steering apparatus provided with a road surface reaction force detector;
Fig. 4 is a chart showing a setting example of a motor angular velocity target value relative to a road surface reaction force;
Fig. 5 is a characteristic chart showing an example of a relationship between steering angle and set value of motor angular velocity target value when friction coefficient is used as a parameter;
Fig. 6 is a block diagram showing an example according to an embodiment of the invention;
Fig. 7 is a block diagram showing a configuration example of a return angular velocity controller unit;
Fig. 8 is a diagram showing an example of a characteristic of a vehicle speed sensitive gain module;
Fig. 9 is a diagram showing an example of a characteristic of a vehicle speed sensitive target value gain module;
Fig. 10 is a diagram showing an example of a characteristic of a torque sensitive output gain module;
Fig. 11 is a flowchart showing an operation example of the invention;
Fig. 12 is a diagram showing a configuration example of a general electric power steering apparatus; and
Fig. 13 is a block configuration diagram showing an example of a control unit.

DETAILED DESCRIPTION OF THE PREFERED EMBODIMENTS

A relationship between steering angle and road surface reaction force exhibits linear characteristics as is shown in Figs. 1 and 2. Fig. 1 shows a characteristic based on vehicle speed as a parameter, while Fig. 2 shows a characteristic based on friction coefficient as a parameter. In either case, the characteristics exhibited are such that the road surface reaction force increases in proportion to steering angle. A road surface reaction force is detected, as is shown in Fig. 3, by a road surface reaction force detector 7 which is provided on a steering shaft and equals a self-aligning torque (SAT). Due to this, a SAT value can also be used in place of road surface reaction force, and the calculation of a SAT value can be implemented by a method described, for example, in Japanese Patent Unexamined Publication No.JP-A-2003-200844. The linear relationship between steering angle and road surface reaction force is maintained excluding driving on a road surface which is not flat and at an extremely low speed. Consequently, a motor angular velocity target value is set using a road surface reaction force or an SAT estimation value in place of a steering angle, so as to operate a convergent current. The convergent current is a current which slows the rotational speed of the steering wheel so that the steering wheel can stop at its neutral point when the steering wheel is allowed to be aligned with no hand placed thereon, and with no convergent current provided, in particular, when the hands are put off the steering wheel while driving at high speeds, the steering wheel is caused to oscillate to the left and right and does not converge at its neutral point.

Normally, in the case of rotational motion, the convergence is increased by applying a braking force which is proportional to angular velocity. Namely, it is similar to the fact that while in the case of linear motion, a thing continues to oscillate only with its mass and a spring, when a viscous force (a resisting force proportional to speed) is imparted thereto by a damper, the oscillation is caused to converge. Consequently, in the case of the power steering apparatus, a braking force which is proportional to angular velocity is imparted, and this equals the fact that a proportional control is performed on an angular velocity target value which is zero. In the present invention, by setting this target value in a return direction of the steering wheel, a function to improve the return or alignment of the steering wheel is imparted at the same time. Namely, since the target value for the proportional control is set in the direction in which the steering wheel is returned to its neutral point, the steering wheel is controlled so as to move towards the neutral point until the steering wheel returns to the neutral point, and the control force of the steering wheel so controlled is outputted like viscous force. Furthermore, since the column shaft of the electric power steering and the motor are coupled to each other via the reduction gear, the rotational speed of the column shaft and the rotational speed of the motor are in a proportional relationship, and the aforesaid object is attained by implementing a similar control on motor angular velocity.

Consequently, in this embodiment, by providing a unit which sets a motor angular velocity target value using a road surface reaction force, as is shown in Fig. 4, and operating a convergent current, almost the same function and advantage as those obtained by setting a motor angular velocity target value using a steering angle can be obtained on a normal road surface. A relationship between steering angle and motor angular velocity target value based on friction coefficient as a parameter becomes a relationship as is shown in Fig. 5. With a small friction coefficient on a road surface, an increase in road surface reaction force relative to steering angle becomes smaller than the normal state, and the motor angular velocity target value is also set to be so small as to correspond to the reduction in friction coefficient.

By this configuration, when the friction on the road surface is small, the return speed of the steering wheel is suppressed, and the steering wheel is allowed to return to its neutral point in an ensured manner. On the contrary, also when the friction coefficient on the road surface is large, an appropriate return speed can be set for the same reason. This is true with a case where the road surface reaction force varies as the vehicle speed changes. However, when a fast return of the steering wheel is not preferred at high vehicle speeds, the return or alignment of the steering wheel may be adjusted by a vehicle speed sensitive gain or the like. In addition, in the event that a sticky feeling produced by this function of adjusting the return of the steering wheel affects the steering feeling, the function can be suppressed by a torque sensitive gain while the driver is turning the steering wheel at his or her own will.

Hereinafter, the embodiment of the invention will be described by reference to the drawings.

Fig. 6 shows the embodiment of the invention in a way corresponding to Fig. 13, a return angular velocity controller unit 40 is provided for calculating a return angular velocity control signal ωr, the return angular velocity control signal ωr so operated is added to an adder unit 33 for correction of a steering assist command value Iref2. A steering torque T from a torque sensor, a road surface reaction force RR from a road surface reaction force detection unit and an angular velocity ω detected or estimated are inputted into the return angular velocity controller unit 40. In addition, an inter-terminal voltage detection unit 50 is connected to a motor 20, so that an inter-terminal voltage Vm detected thereby is then inputted into an angular velocity detection unit 51. The angular velocity detection unit 51 detects an angular velocity ω based on a motor current Im and an inter-terminal voltage Vm and inputs the angular velocity ω so detected into the return angular velocity controller unit 40.

As is shown in Fig. 7, the return angular velocity controller unit 40 includes a vehicle speed sensitive output gain module 41 which outputs a vehicle speed sensitive gain G2 when a vehicle speed V is inputted thereinto, a vehicle speed sensitive target value gain module 42 which outputs a vehicle speed sensitive target value gain G1 when the vehicle speed V is inputted thereinto, a gain module 43 which multiplies the road surface reaction force RR by a predetermined gain G0, a motor angular velocity target value setting module 44 which outputs a motor angular velocity target value Mt with such a characteristic as is shown in Fig. 4 when a road surface reaction force RRa which results from the multiplication by the gain G0 in the gain module 43, a multiplier module 45 which multiplies the motor angular velocity target value Mt by the vehicle speed sensitive target value gain G1, a subtracter module 46 which subtracts the angular velocity ω from the result of the multiplication (= Mt·G1) from the multiplier module 45, a multiplier module 47 which multiplies the result of the subtraction (= Mt·G1 - ω) in the subtracter module 46 by the vehicle speed sensitive gain G2, a torque sensitive output gain module 48 which outputs a torque sensitive gain G3 when the steering torque T is inputted thereinto, and a multiplier module 49 which multiplies the result of the multiplication (= (Mt·G1 - ω) · G2) from the multiplier unit 47 by the torque sensitive gain G3.

An output characteristic of the vehicle speed sensitive output gain module 41 is as shown in Fig. 8, an output characteristic of the vehicle speed sensitive target value gain module 42 is as shown in Fig. 9, and an output characteristic of the torque sensitive output gain module 48 is as shown in Fig. 10.

In the configuration that has been described above, operation examples thereof will be described be reference to a flowchart shown in Fig. 11.

Firstly, a steering torque T and a vehicle speed V are inputted (step S10), steering assist command values Iref1 to Iref4 are calculated and furthermore, a voltage command value Vm is obtained (step S11), so that the motor is driven by a control similar to the control described in Fig. 13 (step S12). A motor current Im of the motor 20 is detected by a current detector (not shown) for inputting into the angular velocity detection unit 51, and an inter-terminal voltage Vm is detected by the inter-terminal voltage detection unit 50 for inputting into the angular velocity detection unit 51 (step S13). The angular velocity detection unit 51 detects a angular velocity ω based on the motor current Im and the inter-terminal voltage Vm which have been inputted thereinto (step S14) for inputting into the return angular velocity control unit 40. In the return angular velocity control unit 40, the vehicle speed sensitive gain module outputs a gain G2 and the vehicle speed sensitive gain module 42 outputs a gain G1 both based on the vehicle speed V (step S20).

In addition, the torque sensitive output gain module 48 outputs a gain G3 based on the steering torque T (step S21), and by inputting the road surface reaction force RR, a motor angular velocity target value Mt is set by the gain module 43 and the motor angular velocity target value setting module 44 (step S23). Then, the multiplier unit 45 multiplies the motor angular velocity target value Mt by the vehicle speed sensitive target value Gain G1, the angular velocity ω is subtracted from the value resulting from the multiplication (=Mt·G1), the value resulting from the subtraction is multiplied by the torque sensitive output gain G2, and the value resulting from the multiplication (= (Mt·G1 - ω) G2) is multiplied by the torque sensitive output gain G3, so as to operate a return angular velocity control signal ωr (step S24). Namely, the return angular velocity control unit 40 calculates the return angular velocity control signal ωr by Equation (1) below.

$$\omega r = (Mt \cdot G1 - \omega) \cdot G2 \cdot G3 \quad . . . (1)$$

In addition, the order of steps S20 to S23 can arbitrarily changed. The return angular velocity control signal ωr that was calculated in the return angular velocity controller unit 40 is inputted into the adder unit 33, whereby the steering assist command value Iref2 is compensated in such a way as to conform to the road surface reaction force RR (step S25). The motor 20 is driven in accordance with the steering assist command value Iref3 so corrected.

Note that while in Figs. 6 and 7, the return angular velocity control signal ωr is obtained by inputting the road surface reaction force RR from the road surface reaction force detector, as is described in the JP-A-2003-200844, an SAT value estimated based on the steering torque, current command value, motor angular velocity and motor angular acceleration may be inputted for operation.

While the invention has been described in connection with the exemplary embodiments, it will be obvious to those skilled in the art that various changes and modification may be made therein without departing from the present invention, and it is aimed, therefore, to cover in the appended claim all such changes and modifications as fall within the true spirit and scope of the present invention.

## Claims

**1.** An electric power steering apparatus comprising:

an electric motor which imparts a steering assist force to a steering mechanism, and is controlled based on a current control value;
a road surface reaction force detection unit which detects a road surface reaction force;
an angular velocity detection unit which detects an angular velocity of the motor; and
a return angular velocity control unit which operates a return angular velocity control signal based on the road surface reaction force, the angular velocity, the steering torque and the vehicle speed, wherein
the current control value is calculated from a motor current and a steering assist command value which is operated based on a steering torque and a vehicle speed, and
the steering assist command value is corrected by the return angular velocity control signal.

**2.** The electric power steering apparatus as set forth in Claim 1, wherein
the road surface reaction force detection unit is a road surface reaction force detector.

**3.** The electric power steering apparatus as set forth in Claim 1, wherein
the road surface reaction force detection unit is SAT (Self-Alignment Torque) estimation unit, and
an SAT estimation value that is estimated by the SAT estimation unit is made to constitute the road surface reaction force.

**4.** The electric power steering apparatus as set forth in Claim 1, wherein the angular velocity detection unit is made to detect or estimate the angular velocity based on an inter-terminal voltage and the motor current.

**5.** The electric power steering apparatus as set forth in Claim 1, wherein the return angular velocity control unit comprises:

a motor angular speed target value setting unit which sets a motor angular velocity target value based on the road surface reaction force;
a first gain adjustment unit which outputs a first gain according to the vehicle speed;
a subtracter unit for obtaining a deviation between the angular velocity and a value obtained by multiplying the motor angular velocity target value by the first gain, and
a third gain adjustment unit which outputs a third gain according to the steering torque, and

wherein the return angular velocity control signal is made up by multiplying the deviation by the third gain.

**6.** The electric power steering apparatus as set forth in Claim 1, wherein the return angular velocity control unit comprises:

a motor angular speed target value setting unit which sets a motor angular velocity target value based on the road surface reaction force;
a first gain adjustment unit which outputs a first gain according to the vehicle speed;
a second gain adjustment unit which outputs a second gains according to the vehicle speed;
a subtracter unit which obtains a deviation between the angular velocity and a value obtained by multiplying the motor angular velocity target value by the first gain; and
a third gain adjustment unit which outputs a third gain according to the steering torque, and

wherein the return angular velocity control signal is made up by multiplying the deviation by the second gain and multiplying the resultant value from the multiplication by the third gain.

**7.** The electric power steering apparatus as set forth in Claim 5, wherein the motor angular velocity target value is set by a gain which varied in accordance with the road surface reaction force.

FIG. 1

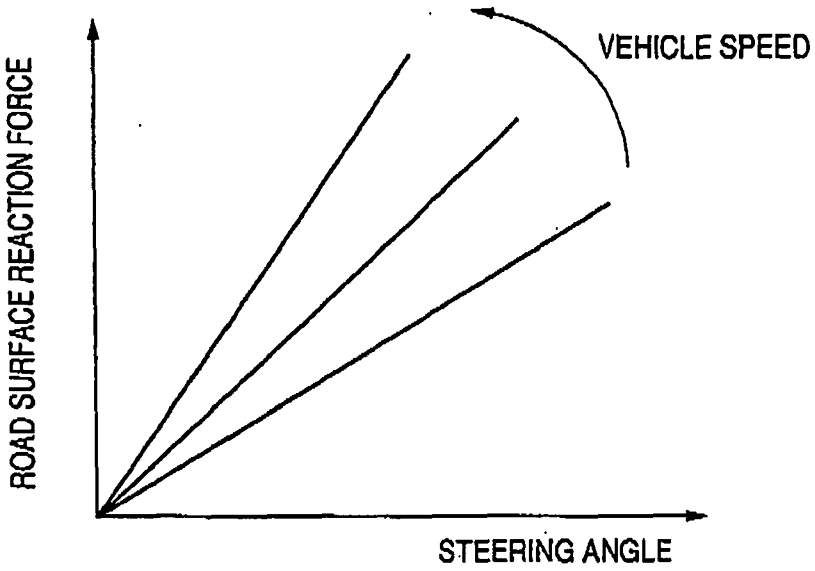
VEHICLE SPEED
ROAD SURFACE REACTION FORCE
STEERING ANGLE

FIG. 2

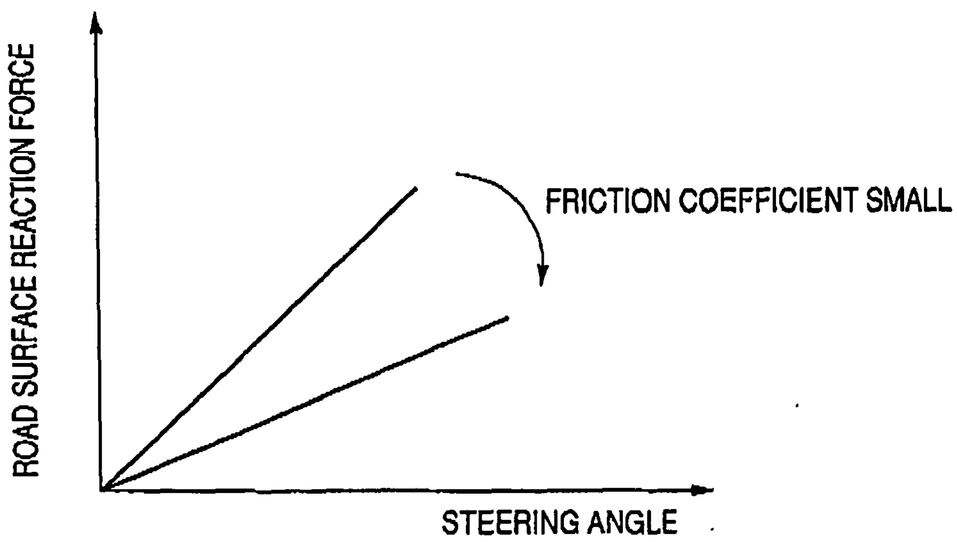
FRICTION COEFFICIENT SMALL
ROAD SURFACE REACTION FORCE
STEERING ANGLE

FIG. 3

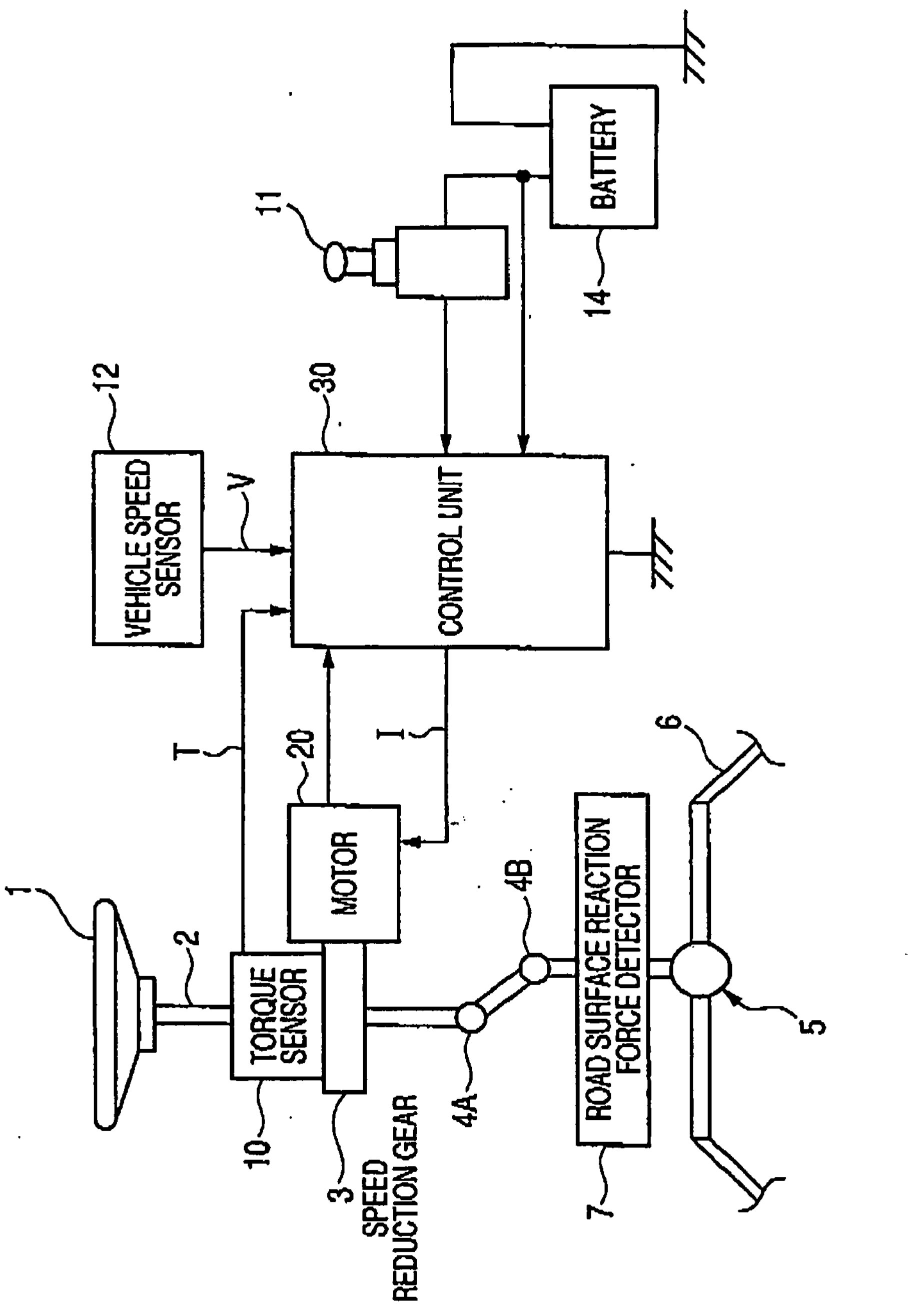
VEHICLE SPEED SENSOR
CONTROL UNIT
BATTERY
MOTOR
TORQUE SENSOR
SPEED REDUCTION GEAR
ROAD SURFACE REACTION FORCE DETECTOR
V
T
I
1
2
3
4A
4B
5
6
7
10
11
12
14
20
30

FIG. 4

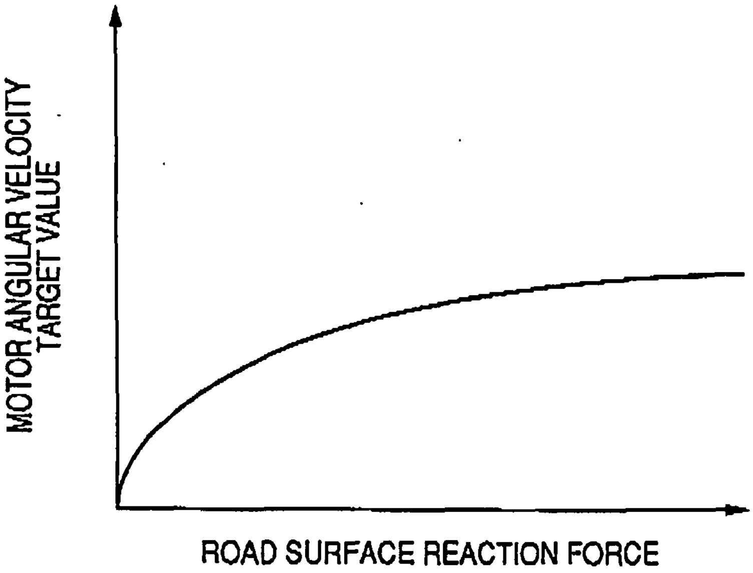
MOTOR ANGULAR VELOCITY
TARGET VALUE
ROAD SURFACE REACTION FORCE

FIG. 5

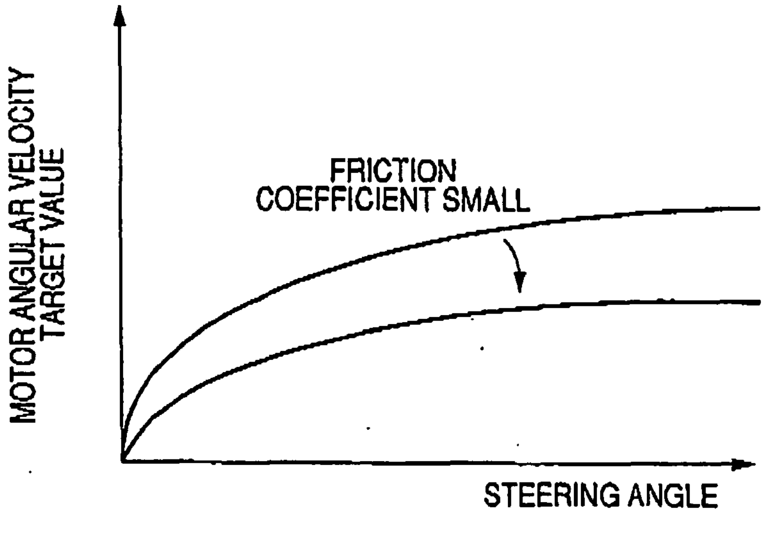
MOTOR ANGULAR VELOCITY
TARGET VALUE
FRICTION
COEFFICIENT SMALL
STEERING ANGLE

FIG. 6

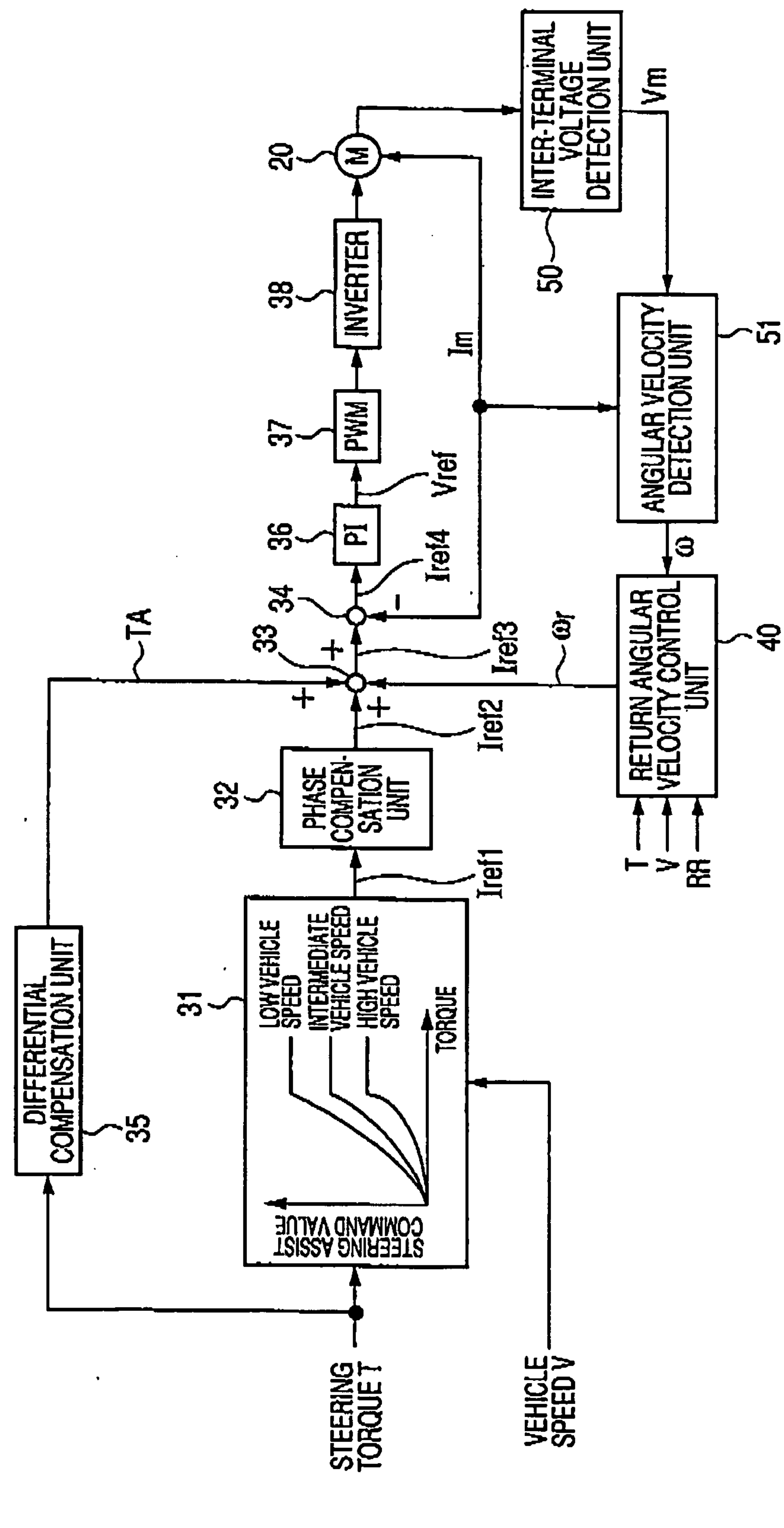

STEERING TORQUE T
VEHICLE SPEED V
DIFFERENTIAL COMPENSATION UNIT
35
31
STEERING ASSIST COMMAND VALUE
TORQUE
LOW VEHICLE SPEED
INTERMEDIATE VEHICLE SPEED
HIGH VEHICLE SPEED
Iref1
32
PHASE COMPEN-SATION UNIT
Iref2
TA
33
+
+
+
Iref3
34
-
Iref4
36
PI
Vref
37
PWM
38
INVERTER
20
M
Im
INTER-TERMINAL VOLTAGE DETECTION UNIT
50
Vm
ANGULAR VELOCITY DETECTION UNIT
51
ω
RETURN ANGULAR VELOCITY CONTROL UNIT
40
ωr
T
V
RA

FIG. 7

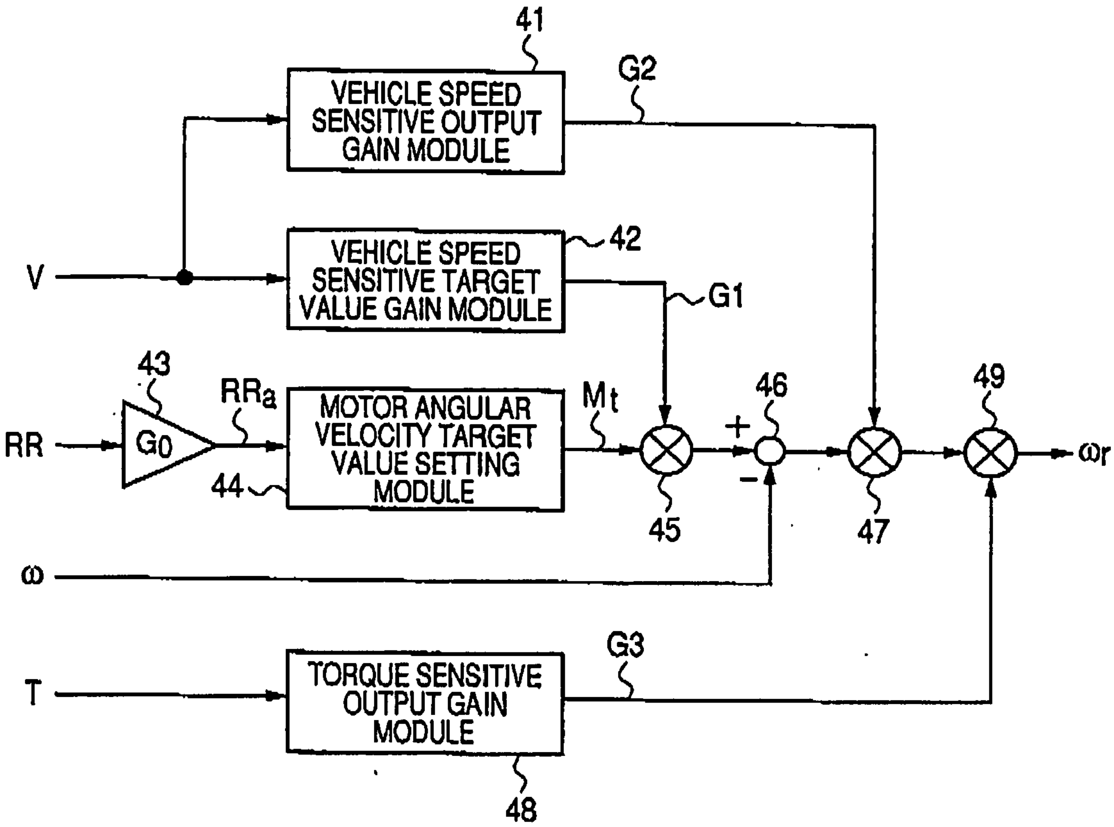
41
G2
VEHICLE SPEED SENSITIVE OUTPUT GAIN MODULE
42
V
VEHICLE SPEED SENSITIVE TARGET VALUE GAIN MODULE
G1
43
RRa
RR
G0
MOTOR ANGULAR VELOCITY TARGET VALUE SETTING MODULE
44
Mt
46
49
+
−
45
47
ωr
ω
G3
T
TORQUE SENSITIVE OUTPUT GAIN MODULE
48

FIG. 8

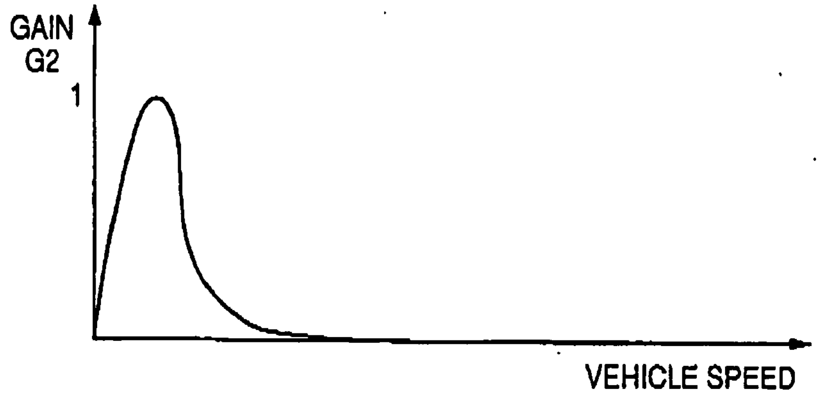


FIG. 9

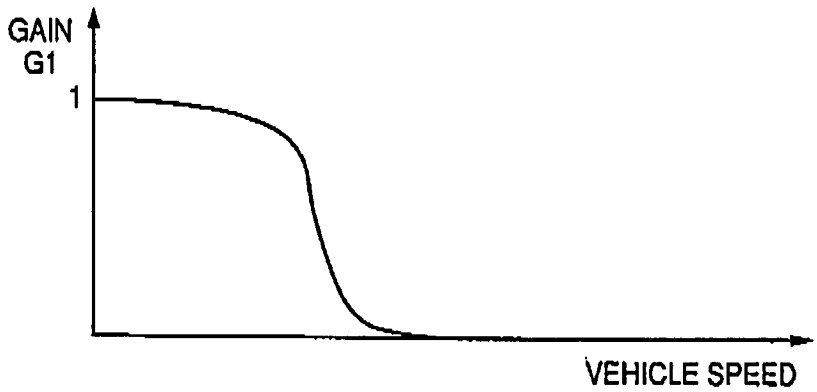


FIG. 10

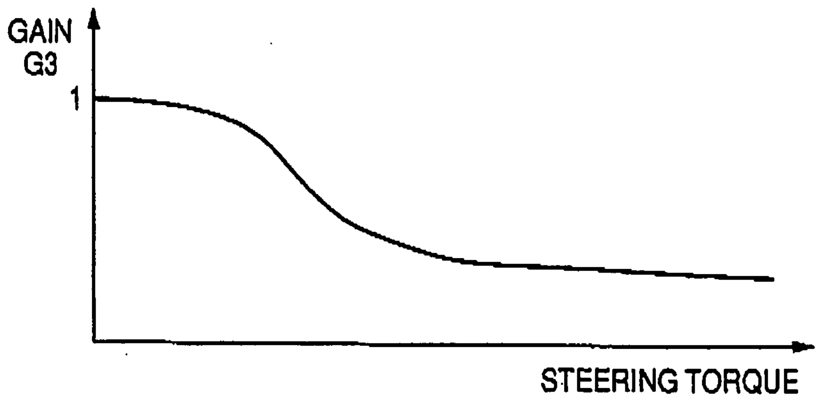

FIG. 11

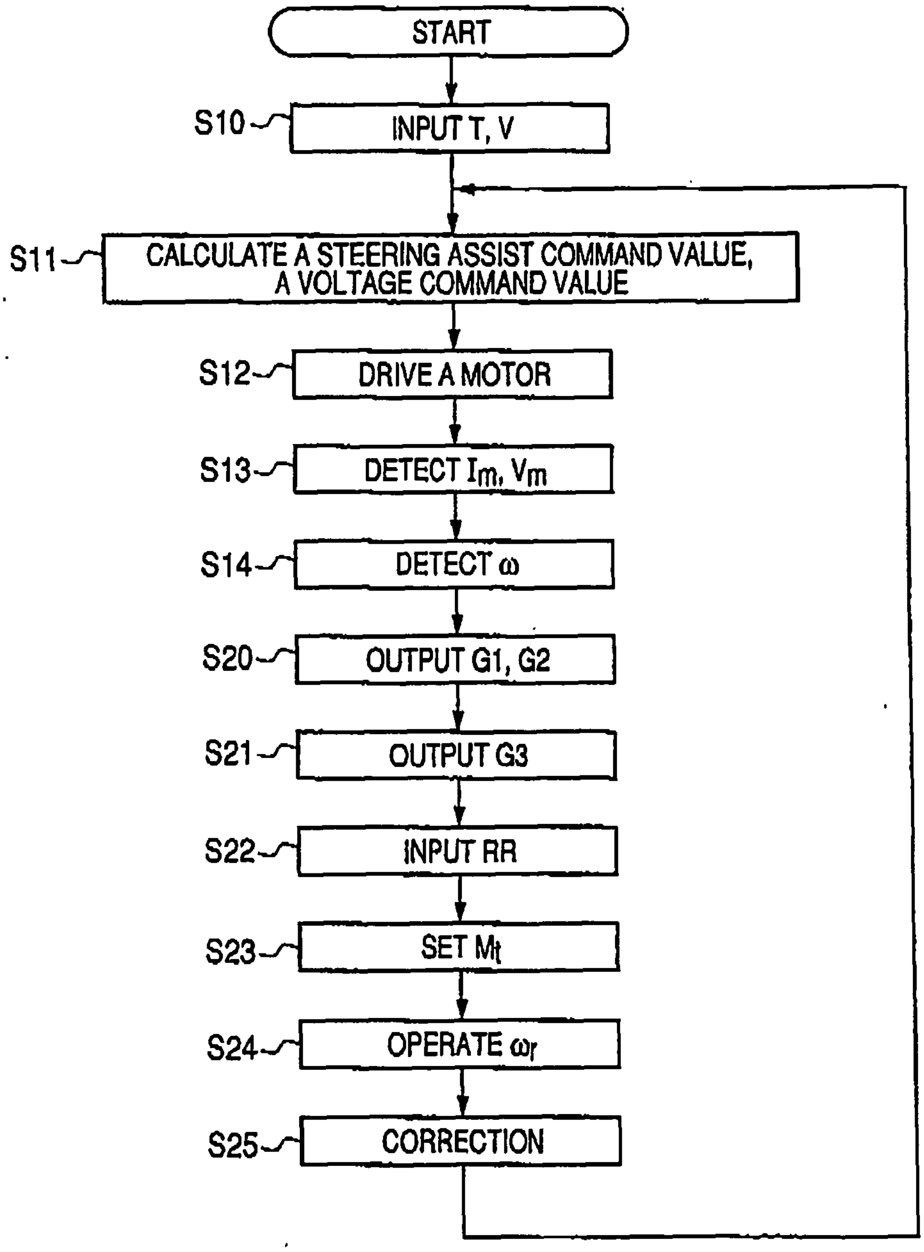
START
S10
INPUT T, V
S11
CALCULATE A STEERING ASSIST COMMAND VALUE, A VOLTAGE COMMAND VALUE
S12
DRIVE A MOTOR
S13
DETECT Im, Vm
S14
DETECT ω
S20
OUTPUT G1, G2
S21
OUTPUT G3
S22
INPUT RR
S23
SET Mt
S24
OPERATE ωr
S25
CORRECTION

FIG. 12

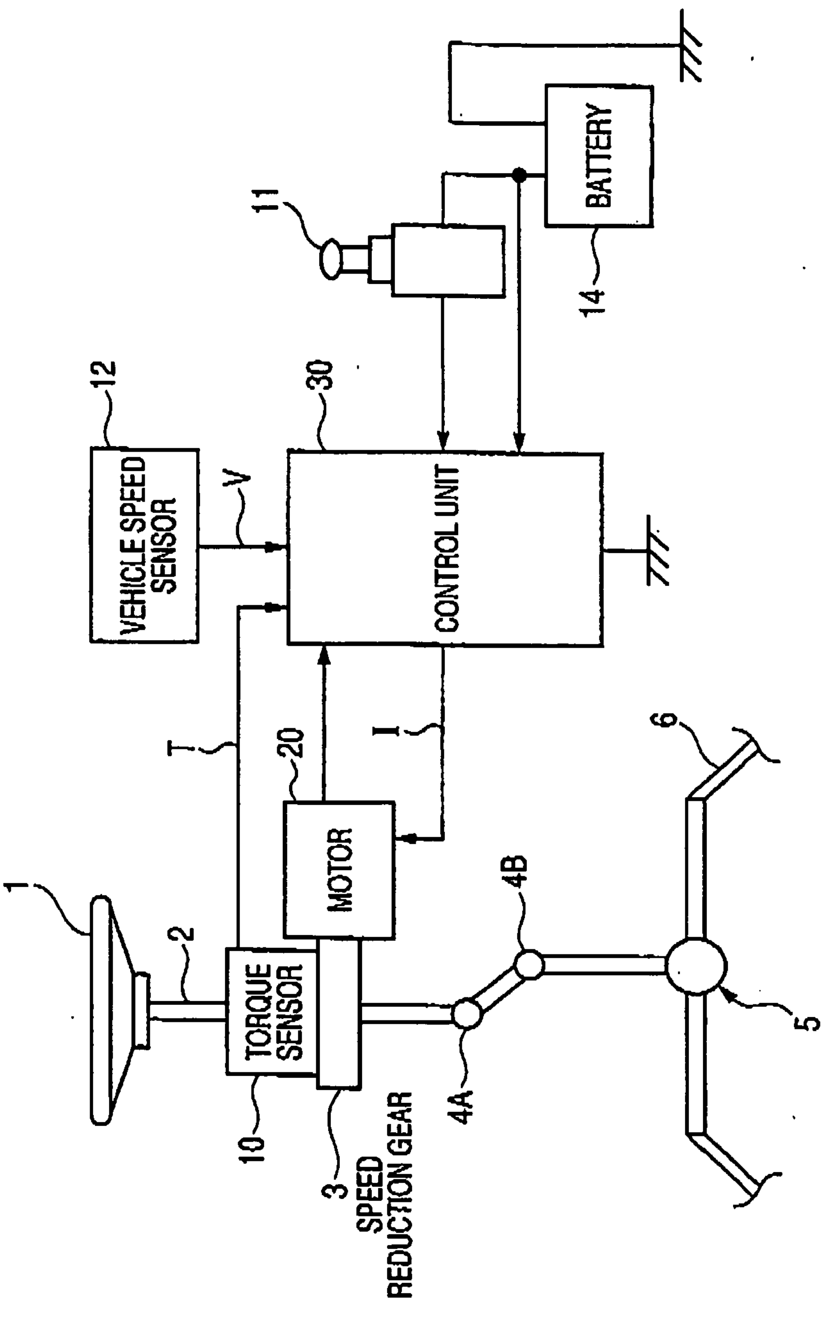
VEHICLE SPEED SENSOR
12
V
30
CONTROL UNIT
11
BATTERY
14
T
20
I
MOTOR
1
2
TORQUE SENSOR
10
3
SPEED REDUCTION GEAR
4A
4B
5
6

FIG. 13

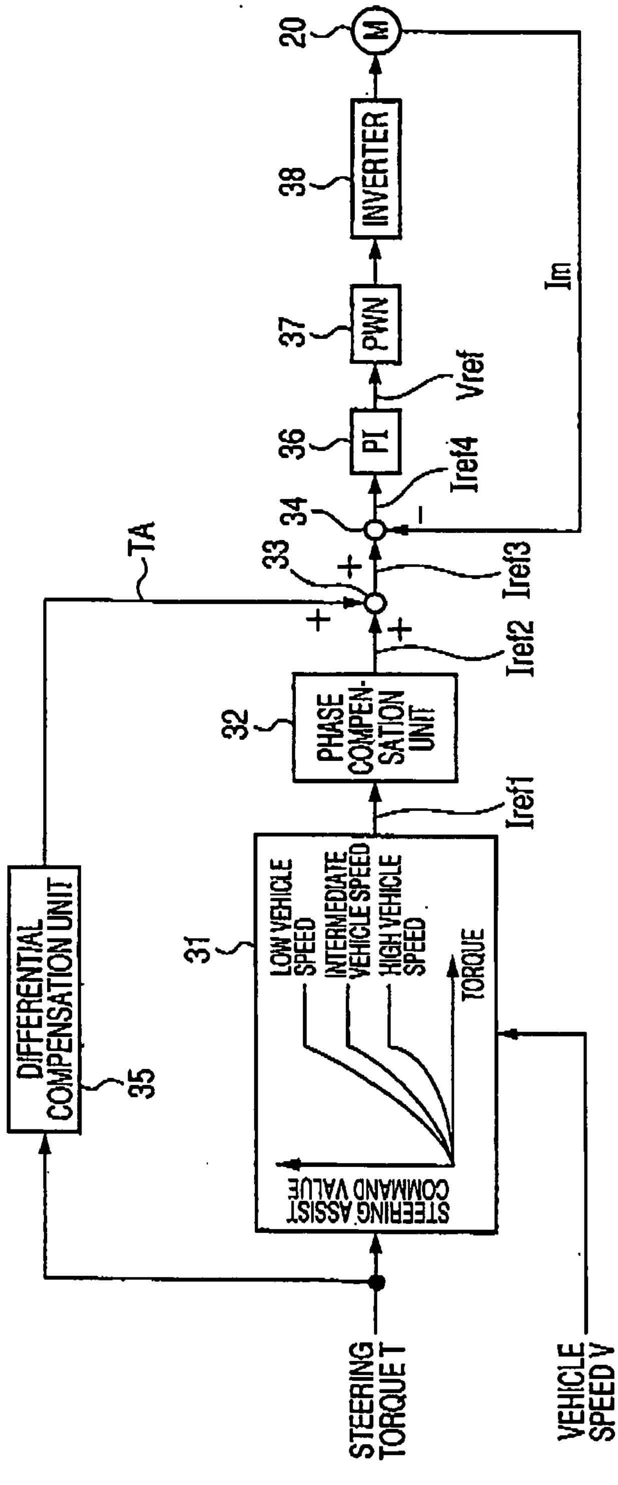
STEERING TORQUE T
VEHICLE SPEED V
DIFFERENTIAL COMPENSATION UNIT
35
31
STEERING ASSIST COMMAND VALUE
LOW VEHICLE SPEED
INTERMEDIATE VEHICLE SPEED
HIGH VEHICLE SPEED
TORQUE
Iref1
32
PHASE COMPEN-SATION UNIT
Iref2
TA
33
+
+
+
Iref3
34
−
Iref4
36
PI
Vref
37
PWN
38
INVERTER
20
M
Im

European Patent Office

# EUROPEAN SEARCH REPORT

Application Number
EP 07 02 2218

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | JP 2002 160655 A (TOYODA MACHINE WORKS LTD) 4 June 2002 (2002-06-04)<br>* abstract; figures 1,3,4,17,15,19 * | 1,2,4-7<br>3 | INV.<br>B62D5/04 |
| Y | EP 1 470 987 A (NSK LTD [JP])<br>27 October 2004 (2004-10-27)<br>* claims 1,2,5; figure 1 * | 3 | |
| A | US 6 863 150 B1 (TANAKA HIDEYUKI [JP] ET AL) 8 March 2005 (2005-03-08)<br>* claim 1; figures 1,4,9,10 * | 1-7 | |
| A | DE 196 49 166 A1 (HONDA MOTOR CO LTD [JP])<br>5 June 1997 (1997-06-05)<br>* claims 1-3; figures 7,8,12 * | 1-7 | |
| A | EP 1 077 171 A (MITSUBISHI ELECTRIC CORP [JP]) 21 February 2001 (2001-02-21)<br>* the whole document * | 1-7 | |
| A | EP 0 842 840 A (GEN MOTORS CORP [US] DELPHI TECH INC [US])<br>20 May 1998 (1998-05-20)<br>* column 9, lines 16-31; claims 1-4; figures 1,2 * | 1-7 | TECHNICAL FIELDS SEARCHED (IPC)<br>B62D |

The present search report has been drawn up for all claims

1

| Place of search | Date of completion of the search | Examiner |
|---|---|---|
| Berlin | 14 February 2008 | MATOS GONCALVES, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 07 02 2218

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2008

| Patent document cited in search report | Publication date | Patent family member(s) | Publication date |
|---|---|---|---|
| JP 2002160655 A | 04-06-2002 | JP 3788906 B2 | 21-06-2006 |
| EP 1470987 A | 27-10-2004 | AU 2003201912 A1 | 30-07-2003 |
| | | WO 03059719 A1 | 24-07-2003 |
| | | JP 3838101 B2 | 25-10-2006 |
| | | JP 2003200844 A | 15-07-2003 |
| | | US 2005103561 A1 | 19-05-2005 |
| US 6863150 B1 | 08-03-2005 | DE 10348792 B3 | 04-05-2005 |
| | | US 2005067214 A1 | 31-03-2005 |
| DE 19649166 A1 | 05-06-1997 | JP 3525969 B2 | 10-05-2004 |
| | | JP 9156518 A | 17-06-1997 |
| | | US 5904223 A | 18-05-1999 |
| EP 1077171 A | 21-02-2001 | JP 3353770 B2 | 03-12-2002 |
| | | JP 2001122146 A | 08-05-2001 |
| | | US 6450287 B1 | 17-09-2002 |
| EP 0842840 A | 20-05-1998 | DE 69620415 D1 | 08-05-2002 |
| | | DE 69620415 T2 | 31-10-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 62241768 A
- JP 3788906 B
- JP 2003200844 A